Europäisches Patentamt

European Patent Office

Office européen des brevets

(19)

(11) **EP 0 936 784 B1**

(12) **FASCICULE DE BREVET EUROPEEN**

(45) Date de publication et mention
de la délivrance du brevet:
**11.10.2000 Bulletin 2000/41**

(51) Int Cl.⁷: **H04L 27/20**, H04L 25/03

(21) Numéro de dépôt: **99102638.6**

(22) Date de dépôt: **03.08.1998**

(54) **Mise en forme d'impulsions pour le réglage de la variation en amplitude de signaux MDP**

Pulsformung für die Kontrolle der Amplitudenvariationen von PSK-Signalen

Pulse shaping for the control of the amplitude variation of PSK signals

(84) Etats contractants désignés:
**AT BE CH DE ES FR GB GR IE IT LI PT**
Etats d'extension désignés:
**LT LV RO SI**

(30) Priorité: **04.08.1997 FR 9709962**

(43) Date de publication de la demande:
**18.08.1999 Bulletin 1999/33**

(62) Numéro(s) de document de la (des) demande(s)
initiale(s) en application de l'article 76 CBE:
**98401972.9 / 0 896 456**

(73) Titulaire: **MATRA NORTEL COMMUNICATIONS**
**29000 Quimper (FR)**

(72) Inventeurs:
• **Marque-Pucheu, Gérard**
  **75011 Paris (FR)**
• **Roseiro, Albert**
  **92400 Courbevoie (FR)**

(74) Mandataire: **Loisel, Bertrand**
**Cabinet Plasseraud,**
**84, rue d'Amsterdam**
**75440 Paris Cédex 09 (FR)**

(56) Documents cités:
**EP-A- 0 494 696        EP-A- 0 633 680**
**EP-A- 0 633 681        FR-A- 2 675 001**

**Description**

La présente invention concerne les systèmes de radiocommunication numérique. Elle concerne plus particulièrement les méthodes de modulation mises en oeuvre dans de tels systèmes.

La conception d'une modulation numérique vise habituellement à combiner les trois objectifs suivants : un débit numérique élevé, une occupation minimale du spectre et un faible taux d'erreurs de transmission dans différentes conditions de fonctionnement.

Pour obtenir un débit élevé dans un canal de largeur spectrale réduite (débit supérieur à 1 bit/s/Hz) différentes techniques ont été proposées dans le passé.

Une première famille de techniques utilise comme base une modulation de fréquence multiniveau, assortie d'un filtrage adéquat du signal modulant (par exemple un filtrage gaussien, utilisé notamment dans les modulations GMSK) pour réduire les interférences dans le canal adjacent. Ces techniques présentent l'avantage d'une mise en oeuvre aisée, et conduisent à des signaux modulés à enveloppe constante. De ce fait, elles permettent d'équiper l'émetteur d'amplificateurs de puissance fonctionnant en régime saturé, ces amplificateurs étant facilement disponibles et bon marché, et offrant un excellent rendement. Mais il est nécessaire, pour respecter les contraintes relatives aux interférences entre canaux fréquentiels adjacents, de fortement limiter l'indice de modulation et de filtrer sévèrement le signal modulant. Ceci a pour effet de réduire la distance entre les symboles, ce qui nuit à la résistance de la modulation au bruit. En d'autres termes, la sensibilité des récepteurs radioélectriques est limitée.

Une autre famille de techniques utilise comme base les modulations par déplacement de phase (PSK : « phase shift keying »), éventuellement différentielle (DPSK), avec utilisation d'un filtrage du signal résultant pour le respect des normes d'interférences entre canaux adjacents. On choisit en général un filtre vérifiant le critère de Nyquist afin de limiter l'interférence intersymboles. Ces techniques permettent en général d'obtenir des caractéristiques de sensibilité satisfaisantes au prix d'une forte variation de l'amplitude du signal radio, qui exige l'emploi d'amplificateurs très linéaires. Ces amplificateurs linéaires présentent des difficultés de réalisation et de réglage. D'autre part, leur rendement est généralement faible, ce qui est un grave inconvénient pour l'autonomie des stations mobiles. Il est possible d'utiliser un amplificateur non linéaire associé à une technique de linéarisation, mais une telle technique complique l'émetteur d'une manière très significative si les variations d'enveloppe sont importantes.

FR-A-2 675 001 décrit un modulateur numérique utilisant une modulation de phase à 4 états décalée (OQPSK) avec un filtrage du signal modulant selon une fonction de transfert qui est la transformée de Fourier du produit d'un sinus cardinal par une gaussienne.

Il a encore été proposé, par exemple dans les brevets américains 5 642 384 et 5 311 552, d'autres solutions où le choix approprié d'une constellation et d'une technique de modulation codée permet d'éviter des transitions dans la constellation pour lesquelles la variation de phase est relativement importante. Ceci permet de réduire la variation d'amplitude du signal radio à des valeurs compatibles avec des caractéristiques d'amplificateurs de réalisation plus aisée. Cette réduction de l'amplitude se fait toutefois au prix d'une diminution importante des distances entre symboles, qu'il est très difficile de compenser par des gains de codage, en particulier dans la zone de taux d'erreur la plus importante pour les communications de phonie, c'est-à-dire pour des taux d'erreur binaire (TEB) de l'ordre de $10^{-2}$, surtout lorsque le canal est affecté d'évanouissements (fading de Rayleigh).

Un but de la présente invention est de proposer une famille de modulations numériques permettant un compromis entre la résistance au bruit, y compris dans un canal affecté d'évanouissements, les interférences entre canaux fréquentiels adjacents, et la variation d'amplitude du signal radio.

L'invention propose ainsi un procédé de modulation numérique tel qu'énoncé dans la revendication 1, et un modulateur numérique tel qu'énoncé dans la revendication 6.

L'invention permet la réalisation de systèmes de radiocommunication numérique, en particulier de radiocommunication professionnelle, conformes aux normes en vigueur en termes d'interférences entre canaux, offrant des caractéristiques de sensibilité, et donc de portée radioélectrique, sans équivalent, et ce en utilisant des composants d'amplification de puissance aisément disponibles sur le marché et procurant un rendement de puissance élevé.

D'autres particularités et avantages de la présente invention apparaîtront dans la description ci-après d'exemples de réalisation non limitatifs, en référence aux dessins annexés, dans lesquels :

-    les figures 1 et 2 sont respectivement des schémas d'un modulateur numérique selon l'invention et d'un récepteur associé ; et
-    les figures 3 et 4 sont des diagrammes montrant respectivement la constellation et le spectre d'une modulation réalisée selon l'invention.

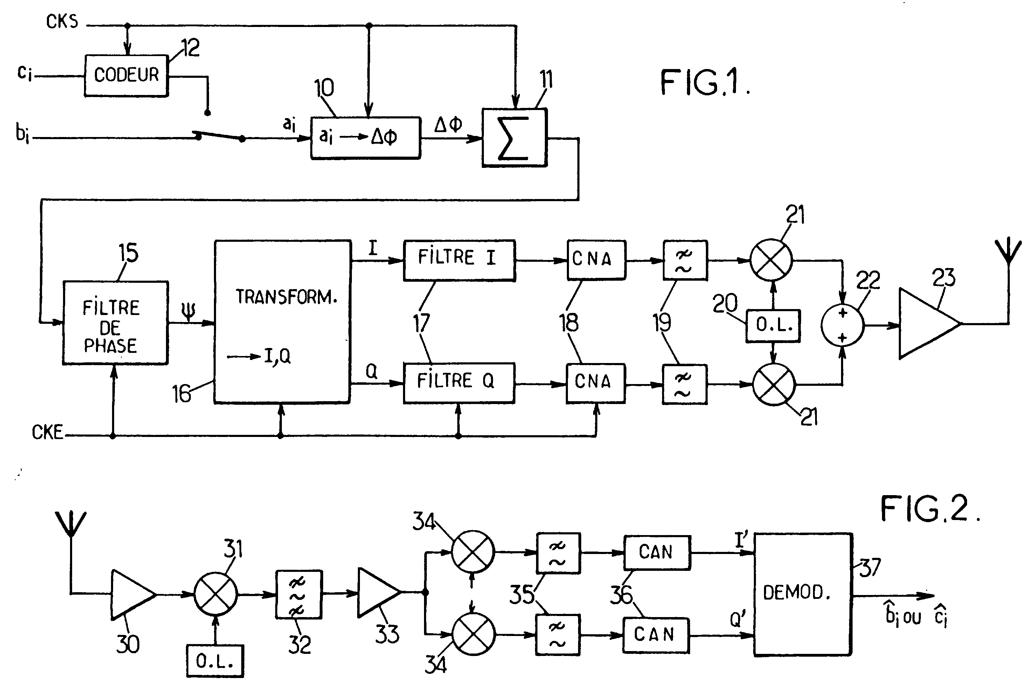

Le modulateur représenté sur la figure 1 comporte une unité 10 qui convertit les symboles successifs $a_i$ d'un train de signal numérique en incréments de phase $\Delta\phi$. Les incréments de phase successifs $\Delta\phi$ produits par l'unité 10 sont accumulés par un sommateur 11. L'unité 10 peut simplement consister en un registre contenant les valeurs possibles des incréments de phase $\Delta\phi$ et adresser par la valeur courante du symbole $a_i$.

Dans l'exemple de réalisation de la figure 1, le train de symbole $a_i$ peut correspondre soit à un train binaire $b_i$, soit à un autre train binaire $c_i$ de débit plus faible traité par un codeur à redondance 12. Les trains binaires $b_i$ et $c_i$ sont délivrés par des sources numériques telles que des codeurs de parole, des sources de données etc., avec généralement application d'un codage correcteur d'erreurs. Lorsque le codeur 12 est utilisé, le modulateur de la figure 1 opère selon une modulation codée (voir G. Ungerboeck, « Channel Coding with Multilevel/Phase Signals », IEEE Trans. On Information Theory, Vol. IT-28, No. 1, janvier 1982, pages 55-67). L'unité 10, le sommateur 11 et le codeur 12 sont cadencés par un signal d'horloge CKS ayant la fréquence $1/T_s$ des symboles $a_i$.

Le sommateur 11 stocke une valeur numérique entière k représentant une phase accumulée. Cette phase accumulée est donc stockée sous la forme de multiples entiers d'un sous-multiple de $\pi$, c'est-à-dire sous la forme générale $(k/P)\pi$. A chaque cycle de l'horloge CKS, la phase accumulée est incrémentée d'une valeur $\Delta\phi$ dépendant du symbole courant $a_i$. Si chaque symbole représente m bits, $M=2^m$ valeurs différentes de l'incrément pourront être ajoutées à chaque cycle. On choisit ces M valeurs de telle sorte que l'ensemble des incréments soit symétrique par rapport à la valeur 0 pour que le spectre soit symétrique. On utilisera typiquement des valeurs de k de la forme $k=k'\times K$, K/P représentant l'indice de modulation, avec $k'= -M+1, -M+3,..., -1, 1,...,M-3$ ou $M-1$. Ce choix d'incréments équirépartis n'est pas le seul possible. Par exemple, avec $m=2$, on pourrait encore prendre $k'=-7, -3, 3$ ou $7$. On note $\Delta\phi_{max}=(k_{max}/P)\pi$, la valeur maximale de l'incrément de phase $\Delta\phi$.

La phase accumulée est adressée à un filtre numérique 15, dit filtre de phase, dont la fréquence d'échantillonnage $1/T_e$, donnée par un signal d'horloge CKE, est supérieure à la fréquence $1/T_s$ des symboles $a_i$ (généralement un multiple de cette fréquence).

Le signal de sortie du filtre de phase 15 est une phase modulante $\Psi$, qu'une unité 16 transforme en un signal complexe, c'est-à-dire en deux signaux réels, l'un I représentant la partie réelle de ce signal complexe, et l'autre Q représentant sa partie imaginaire.

Ce signal complexe est de module constant et d'argument égal à la phase modulante. En d'autres termes, $I=\cos\Psi$ et $Q=\sin\Psi$. L'unité 16 peut consister simplement en deux zones de mémoire morte adressées par la sortie du filtre 15 à chaque cycle de l'horloge CKE.

Le signal complexe est filtré par un filtre numérique consistant, dans la réalisation représentée, en deux filtres identiques 17 filtrant respectivement les composantes I et Q.

Deux convertisseurs numérique-analogique 18 convertissent en analogique les signaux de sortie des deux filtres 17. Les deux signaux analogiques résultant sont fournis à des filtres passe-bas 19 pour éliminer les composantes de repliement spectral. Deux ondes radio en quadrature à la fréquence porteuse, délivrées par un oscillateur local 20, sont modulées, au moyen de mélangeurs respectifs 21, aux signaux délivrés par les filtres anti-repliement 19. Les deux ondes ainsi modulées sont combinées par un sommateur 22 dont la sortie est fournie à l'amplificateur de puissance 23 du dispositif émetteur.

Si l'amplificateur 23 faisait l'objet d'une linéarisation par prédistortion, il y aurait lieu de corriger les composantes I et Q filtrées avant de les convertir en analogique, entre les filtres 17 et les convertisseurs 18.

Le récepteur représenté sur la figure 2 comprend un amplificateur à faible bruit 30 amplifiant le signal capté sur l'antenne, dont la sortie est convertie à une fréquence intermédiaire au moyen d'un mélangeur 31. Un filtre passe-bande 32 traite le signal de fréquence intermédiaire qui est ensuite de nouveau amplifié par un amplificateur 33. Deux autres mélangeurs 34 assurent la conversion en bande de base par mélange avec deux ondes en quadrature. Les deux composantes analogiques en quadrature fournies par les mélangeurs 34 sont soumises à des filtres passe-bas identiques 35, puis converties en numérique par des convertisseurs analogique-numérique 36. Les composantes numériques I' et Q' fournies par les convertisseurs 36 sont adressées à un démodulateur de canal 37.

Le démodulateur 37 effectue les opérations de démodulation qui correspondent au modulateur incomplet formé par les éléments 10, 11, 15, 16 et (éventuellement) 12 de l'émetteur de la figure 1. Ce modulateur incomplet réalisant essentiellement une modulation à phase continue (CPM), le démodulateur 37 peut avoir la forme classique d'un démodulateur CPM. Il peut notamment être basé sur un treillis de démodulation pour appliquer l'algorithme de Viterbi. Le démodulateur 37 délivre des estimations $\hat{b}_i$ ou $\hat{c}_i$ des bits $b_i$ ou $c_i$ fournis au modulateur.

Avantageusement, le démodulateur 37 peut inclure deux treillis. Il utilise l'un ou l'autre de ces deux treillis selon que le codeur 12 est utilisé ou non au niveau de l'émetteur. Le premier de ces deux treillis comporte les états de modulation. Le nombre de ces états est a priori $M^{L-1}\times P$, où L désigne la mémoire du filtre de phase 15 exprimée en nombre d'échantillons, M est le nombre de points de la constellation, et P le dénominateur de l'indice de modulation. Toutefois, il est généralement possible de réduire fortement le nombre d'états du treillis de démodulation sans nuire de façon significative à la qualité de réception. Le second des deux treillis intègre en outre les états de codage du codeur à redondance 12, conformément au principe des modulations codées. Ce second treillis est utilisé lorsque le codeur 12 est utilisé par l'émetteur.

Lors de la conception du modulateur, on commence par choisir les valeurs des incréments de phase $\Delta\phi$, comme indiqué précédemment. Ensuite, on construit le filtre 17 qui traite les composantes I et Q, et qui détermine les caractéristiques spectrales du signal résultant. Ce filtre 17 doit avoir des caractéristiques aussi proches que possible de celles du filtre de réception consistant en la combinaison des filtres 32 et 35.

Une forme avantageuse du filtre numérique 17 de la composante I ou Q consiste en un filtre à réponse impulsionnelle finie choisie pour approcher au mieux une caractéristique temporelle de la forme

$$f(t) = \text{Sinc}(\alpha t/T_s).\text{Sinc}(\beta t/T_s).e^{-(\pi\gamma t/T_s)^2} \qquad (1)$$

où $T_s$ désigne la durée d'un symbole $a_i$, et Sinc() désigne la fonction sinus cardinal. L'approximation est effectuée par un choix des coefficients réels $\alpha$, $\beta$ et $\gamma$. On obtient ainsi des filtres numériques dont la restriction à une longueur finie est la plus précise possible grâce à la décroissance rapide de la fonction gaussienne. Les lobes secondaires induits par la limitation de la longueur du filtre numérique sont ainsi réduits au maximum.

L'étape suivante consiste à définir le filtre de phase 15. Les caractéristiques de ce filtre 15 sont très corrélées à celles du filtre numérique 17. On donne ci-après une méthode heuristique basée sur la propriété mathématique suivante : une fonction complexe $e^{jm(t)}$ de module unitaire à une énergie maximale dans un filtre dont le gabarit spectral de puissance est la transformée de Fourrier d'une fonction h(t) (ou, en d'autres termes, a une énergie minimale en dehors de ce filtre), si elle vérifie l'équation suivante :

$$\int h(u-t).e^{jm(t)}dt = \lambda(u) \cdot e^{jm(u}$$

où $\lambda(u)$ est une fonction réelle.

Pour la détermination du filtre de phase 15, on applique l'algorithme suivant :

1) On choisit un filtre de gabarit de puissance, c'est-à-dire une fonction h(t) dont la transformée de Fourier représente le gabarit spectral recherché. On choisit typiquement un filtre identique à celui choisi comme filtre I-Q. D'autres choix sont bien entendu possibles. De manière générale, il est préférable d'utiliser un filtre dont la réalisation numérique avec une réponse impulsionnelle finie de longueur assez courte est possible.

2) On prend comme première approximation de la fonction de variation de phase, c'est-à-dire de la fonction disponible à la sortie du filtre de phase lorsque l'incrément de phase maximal $\Delta\phi_{max}$ est fourni à l'accumulateur 11, une fonction $\Phi_0$ égale à 0 pour t<0, égale à $\Delta\phi_{max}t/T_s$ pour $0{\leq}t{\leq}T_s$, et égale à $\Delta\phi_{max}$ pour t>$T_s$. D'autres approximations à l'aide de fonctions continues égales à 0 pour t<0 et à $\Delta\phi_{max}$ pour t>$T_s$ seraient utilisables.

3) On calcule itérativement une fonction $\Phi_n$ grâce à la formule :

$$\Phi_{n+1}(u) = \frac{\int h(u-t) \cdot \Phi_n(t) \, dt}{\left| \int h(u-t) \cdot \Phi_n(t) \, dt \right|}$$

4) On calcule la *n*-ième approximation de la réponse impulsionnelle du filtre de phase qui est égale à la dérivée de la fonction $\Phi_n$. On peut également faire une approximation de cette fonction dérivée à l'aide d'une formule analytique approchée pour faciliter les calculs ultérieurs. Cette formule analytique peut être :

$$g(t) = \text{Sinc}(\alpha' t/T_s).\text{Sinc}(\beta' t/T_s).e^{-(\pi\gamma' t/T_s)^2} \qquad (2)$$

où $\alpha'$, $\beta'$ et $\gamma'$ sont des coefficients réels.

5) Pour l'une de ces approximations (par exemple n=2 ou 3), on évalue les caractéristiques de la modulation vis-à-vis des critères de puissance des interférences dans les canaux fréquentiels adjacents, de variation d'amplitude et de résistance au bruit. Si cette approximation ne convient pas, on reprend les calculs 1) à 4), en modifiant les valeurs des incréments de phase, et/ou en modifiant la forme du filtre I-Q 17, et/ou en modifiant la forme du filtre mentionné au 1) ci-dessus, et/ou en modifiant l'approximation du filtre de phase obtenue par l'algorithme.

Le filtre de phase choisi est alors mis en oeuvre sous forme de filtre numérique à réponse impulsionnelle finie.

Le filtre de phase 15 du modulateur de la figure 1 pourrait être remplacé par un banc de filtres de phase sélectionnés selon l'origine du train de symboles $a_i$. On pourrait ainsi avoir un filtre de phase 15 optimisé pour le cas où le codeur à redondance 12 n'est pas utilisé, et un autre optimisé pour le cas où le codeur 12 est utilisé.

Dans une réalisation particulière de l'invention, la durée $T_s$ d'un symbole $a_i$ est égale à 125 µs. Le nombre de bits par symbole est de 2, les incréments de phase étant de $-\pi$, $-\pi/3$, $\pi/3$ ou $\pi$,. Le débit binaire est alors de 16 kbit/ s. Les spécifications spectrales sont celles de la norme ETSI 300-113. La réponse impulsionnelle finie du filtre de phase 15 est d'une longueur de 4 symboles, et est de la forme (2) avec $\alpha'$=0,77, $\beta'$=0,5 et $\gamma'$=0. La réponse impulsionnelle finie du filtre I-Q 17 est d'une longueur de 8 symboles, et est de la forme (1) avec $\alpha$=1,6, $\beta$=0,1 et $\gamma$=0,12. Les valeurs indiquées des paramètres des filtres pourraient être remplacées par des valeurs du même ordre.

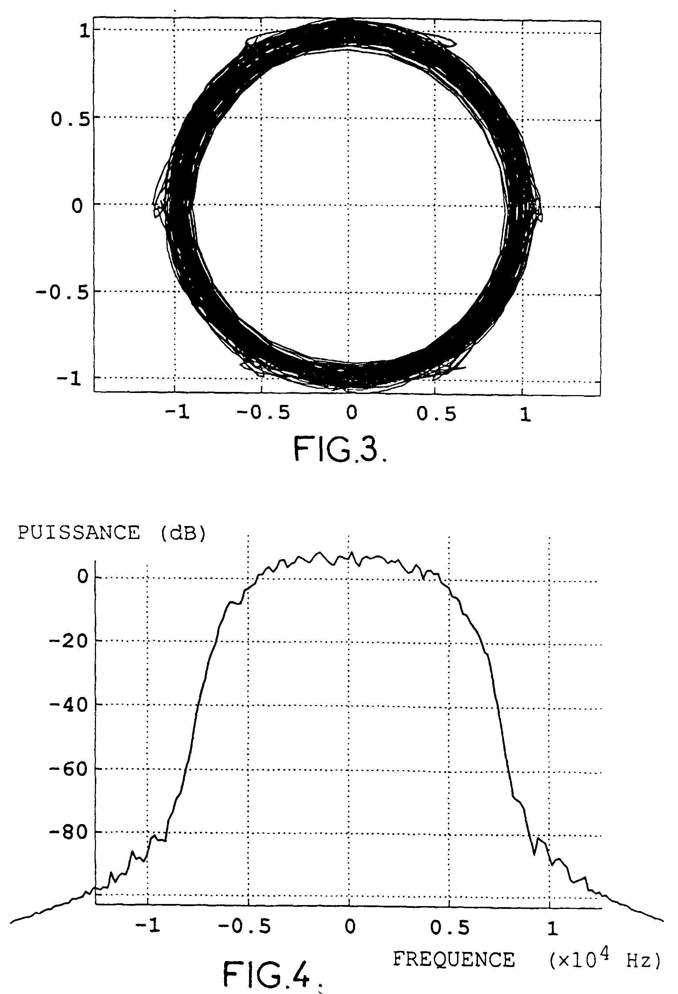

La constellation correspondant à cette modulation est représentée sur la figure 3. On notera la très faible variation d'amplitude, puisque le rapport entre la puissance instantanée maximum et la puissance moyenne est de seulement 1,2 dB, tandis que le rapport entre les puissances instantanées maximum et minimum est inférieur à 2,4 dB. Ces caractéristiques facilitent la mise en ouvre de cette modulation avec des amplificateurs de puissance faiblement linéarisés, facile à mettre au point et offrant un rendement très proche des amplificateurs saturés.

Le spectre est présenté sur la figure 4. On voit que le niveau d'interférences dans le canal adjacent est très faible et compatible avec les normes les plus exigeantes.

Les performances de résistance au bruit sont excellentes, puisqu'avec un canal affecté de bruit blanc gaussien, un taux d'erreur de 1% est constaté pour un rapport signal-sur-bruit $E_b/N_0$ de 5,5 dB dans le cas de stations statiques, tandis que ce même taux d'erreur de 1% est obtenu pour $E_b/N_0$=16 dB dans un cas dynamique (vitesse de 70 km/h, porteuse de 400 MHz). Ces valeurs de taux d'erreur sont obtenues avec des démodulateurs simples et classiques (figure 2), c'est-à-dire des démodulateurs à treillis avec un très petit nombre d'états. On peut utiliser un treillis à seulement trois états dans l'exemple indiqué.

Dans cette même réalisation de l'invention, le codeur à redondance facultatif 12 permet de réaliser une modulation codée. Le codage à redondance est ici un codage convolutif de rendement 1/2, le débit binaire étant alors de 8 kbit/s. Les valeurs des filtres sont identiques, et un treillis à quatre états seulement peut être utilisé au démodulateur. Le gain de codage est de l'ordre de 2,5 dB, avec un taux d'erreur de 1% constaté pour $E_b/N_0$=3,4 dB sur un canal affecté d'un bruit blanc gaussien dans un cas statique.

## Revendications

**1.** Procédé de modulation numérique, dans lequel on convertit les symboles successifs ($a_i$) d'un train de signal numérique en incréments de phase ($\Delta\phi$), on obtient une phase accumulée par sommation des incréments de phase successifs, on obtient une phase modulante ($\Psi$) par filtrage de la phase accumulée, on produit un signal complexe dont l'argument représente la phase modulante, on module respectivement deux ondes radio en quadrature de phase sur la base dudit signal complexe, et on émet un signal radio résultant d'une combinaison des deux ondes modulées, caractérisé en ce que le filtrage de la phase accumulée a une réponse impulsionnelle finie ayant une caractéristique temporelle de la forme :

$$g(t) = \text{Sinc}(\alpha't/T_s).\text{Sinc}(\beta't/T_s).e^{-(\pi\gamma't/T_s)^2},$$

où $T_s$ désigne la durée d'un symbole du train binaire, $\alpha'$, $\beta'$ et $\gamma'$ sont des coefficients réels, et Sinc() désigne la fonction sinus cardinal.

**2.** Procédé selon la revendication 1, dans lequel $T_s$=125 µs, chaque symbole ($a_i$) du train binaire est constitué de 2 bits, les incréments de phase ($\Delta\phi$) sont de $-\pi$, $-\pi/3$, $\pi/3$ ou $\pi$, $\alpha'\approx$0,77, $\beta'\approx$0,5, et $\gamma'\approx$0.

**3.** Procédé selon la revendication 1 ou 2, dans lequel on filtre numériquement ledit signal complexe, et en ce que des signaux numériques obtenus à partir des parties réelle et imaginaire (I,Q) du signal complexe filtré numériquement sont convertis en analogique avant d'être respectivement soumis à un filtrage analogique anti-repliement puis mélangés aux deux ondes radio.

**4.** Procédé selon la revendication 3, dans lequel le filtrage numérique dudit signal complexe consiste en deux filtrages identiques de ses parties réelle et imaginaire (I,Q), avec une réponse impulsionnelle finie approchant une caractéristique temporelle de la forme :

$$f(t) = \text{Sinc}(\alpha t/T_s).\text{Sinc}(\beta t/T_s).e^{-(\pi\gamma t/T_s)^2},$$

où $\alpha$, $\beta$ et $\gamma$ sont des coefficients réels.

5. Modulateur numérique, comprenant : des moyens (10) pour convertir les symboles successifs ($a_i$) d'un train de signal numérique en incréments de phase ($\Delta\phi$), un sommateur (11) qui accumule les incréments de phase successifs pour produire une phase accumulée, un filtre de phase (15) recevant la phase accumulée et produisant une phase modulante ($\Psi$), des moyens (16) pour produire un signal complexe dont l'argument représente la phase modulante, et des moyens de modulation pour moduler respectivement deux ondes radio en quadrature de phase sur la base dudit signal complexe et pour émettre un signal radio résultant d'une combinaison des deux ondes modulées, caractérisé en ce que le filtre de phase (15) a une réponse impulsionnelle finie ayant une caractéristique temporelle de la forme :

$$g(t) = \text{Sinc}(\alpha't/T_s).\text{Sinc}(\beta't/T_s).e^{-(\pi\gamma't/T_s)^2},$$

où $T_s$ désigne la durée d'un symbole ($a_i$) du train binaire, $\alpha'$, $\beta'$ et $\gamma'$ sont des coefficients réels, et Sinc() désigne la fonction sinus cardinal.

6. Modulateur selon la revendication 5, dans lequel $T_s$=125 µs, chaque symbole ($a_i$) du train binaire est constitué de 2 bits, les incréments de phase ($\Delta\phi$) sont de -$\pi$, -$\pi/3$, $\pi/3$ ou $\pi$, $\alpha'\approx0,77$, $\beta'\approx0,5$, et $\gamma'\approx0$.

7. Modulateur selon la revendication 5 ou 6, dans lequel les moyens de modulation comportent un filtre numérique (17) auquel est appliqué ledit signal complexe, des convertisseurs numérique-analogique (18) traitant respectivement des signaux numériques obtenus à partir des parties réelle et imaginaire (I,Q) du signal complexe filtré numériquement, des filtres analogiques anti-repliement (19) recevant les signaux de sortie des convertisseurs numérique-analogique, et deux mélangeurs (21) recevant chacun l'une des deux ondes radio et le signal de sortie de l'un des deux filtres anti-repliement.

8. Modulateur selon la revendication 7, dans lequel le filtre numérique auquel est appliqué ledit signal complexe consiste en deux filtres identiques (17) recevant respectivement les parties réelle et imaginaire (I,Q) du signal complexe et ayant une réponse impulsionnelle finie approchant une caractéristique temporelle de la forme :

$$f(t) = \text{Sinc}(\alpha t/T_s).\text{Sinc}(\beta t/T_s).e^{-(\pi\gamma t/T_s)^2},$$

où $\alpha$, $\beta$ et $\gamma$ sont des coefficients réels.

**Patentansprüche**

1. Verfahren zur digitalen Modulation, bei dem die aufeinanderfolgenden Symbole ($a_i$) eines digitalen Signalzugs in Phaseninkremente ($\Delta\phi$) gewandelt werden, bei dem eine durch Summierung von aufeinanderfolgenden Phaseninkrementen akkumulierte Phase erhalten wird, bei dem eine durch Filterung der akkumulierten Phase eine Modulationsphase ($\psi$) erhalten wird, bei dem ein komplexes Signal erzeugt wird, dessen Argument die Modulationsphase darstellt, bei dem zwei Phasenquadratur-Radiowellen auf Grundlage des komplexen Signals moduliert werden, und bei dem ein aus einer Kombination der zwei modulierten Wellen resulitierendes Radiosignal gesendet wird, dadurch gekennzeichnet, daß die Filterung der akkumulierten Phase eine endliche Impulsantwort aufweist, die eine zeitliche Kennkurve folgender Form besitzt:

$$g(t) = \text{Sinc}(\alpha't/T_s).\text{Sinc}(\beta't/T_s).e^{-(\pi\gamma't/T_s)}$$

wobei $T_s$ die Dauer eines binären Symbolzugs bezeichnet, $\alpha'$, $\beta'$ und $\gamma'$ reelle Koeffizienten sind und Sinc() die Sinusmächtigkeitsfunktion bezeichnet.

2. Verfahren nach Anspruch 1, bei dem $T_s$= 125 µs, jedes Symbol ($a_1$) des binären Zugs aus zwei Bits besteht, und die Phaseninkremente ($\Delta\phi$)

-π, -π/3, π/3 oder π, $\alpha' \approx 0{,}77$, $\beta' \approx 0{,}5$, und $\gamma' \approx 0$ sind.

3. Verfahren nach Anspruch 1 oder 2, bei dem das komplexe Signal digital gefiltert wird, und bei dem die aus den Real- und Imaginärteilen (I, Q) des digital gefilterten komplexen Signals erhaltenen digitalen Signale einer analogen faltungsfreien Filterung unterworfen und daraufhin mit den zwei Radiowellen gemischt werden.

4. Verfahren nach Anspruch 3, bei dem die digitale Filterung des komplexen Signals aus zwei identischen Filterungen seiner Real- und Imaginärteile (I,Q) besteht, wobei eine endliche Impulsantwort sich einer zeitlichen Kennkurve folgender Form nähert:

$$f(t) = \mathrm{Sinc}(\alpha t/T_s).\mathrm{Sinc}(\beta t/T_s).e^{-(\pi\gamma t/T_s)^2}$$

wobei $\alpha$, $\beta$, und $\gamma$ reale Koeffizienten sind.

5. Digitaler Modulator, aufweisend:
Mittel (10) zum Wandeln aufeinanderfolgender Symbole (ai) eines digitalen Signalzugs in Phaseninkremente ($\Delta\phi$), einen Summenbildner (11), der die aufeinanderfolgenden Phaseninkremente akkumuliert, um eine akkumulierte Phase zu erzeugen, einen Phasenfilter (15), der die akkumulierte Phase empfängt, und eine Modulationsphase ($\psi$) erzeugt, Mittel (16) zum Erzeugen eines komplexen Signals, dessen Argument die Modulationsphase wiedergibt, und Modulationsmittel zum jeweiligen Modulieren von zwei Phasenquadraturradiowellen auf Grundlage des komplexen Signals und zum Senden eines Radiosignals, das aus einer Kombination der zwei modulierten Wellen resultiert, dadurch gekennzeichnet, daß der Phasenfilter (15) eine endliche Impulsantwort aufweist, die eine zeitliche Kennkurve der folgenden Form besitzt:

$$g(t) = \mathrm{Sinc}(\alpha' t/T_s).\mathrm{Sinc}(\beta' t/T_s).e^{-(\pi\gamma' t/T_s)^2}$$

wobei $T_s$ die Dauer eines binären Symbolzugs bezeichnet, $\alpha'$, $\beta'$ und $\gamma'$ reelle Koeffizienten sind und sinc() die Sinusmächtigkeitsfunktion bezeichnet.

6. Modulator nach Anspruch 5, wobei $T_s = 125\ \mu s$, jedes Symbol ($a_i$) des binären Zugs aus zwei Bits besteht, und die Phaseninkremente ($\Delta\phi$)
-π, -π/3, π/3 oder π, $\alpha' \approx 0{,}77$, $\beta' \approx 0{,}5$, und $\gamma' \approx 0$ sind.

7. Modulator nach Anspruch 5 oder 6, bei dem die Modulationsmittel einen digitalen Filter (17) aufweisen, an dem das komplexe Signal angelegt ist, Digital-Analogwandler (18) zur Verarbeitung der digitalen Signale, die aus den Real- und Imaginärteilen (I, Q) des gefilterten numerischen komplexen Signals erhalten sind, analoge faltungsfreie Filter (19) zum Empfang der Ausgangssignale der Digital-/Analogwandler, und zwei Mischer (21) zum Empfang von jeweils einer der zwei Radiowellen und des Ausgangssignals von einem der Filter mit entgegengesetzter Faltung.

8. Modulator nach Anspruch 7, wobei der numerische Filter, an den das komplexe Signal angelegt ist, aus zwei identischen Filtern (17) besteht, die jeweils die Real- und Imaginärteile (I, Q) des komplexen Signals empfangen, und die eine endliche Impulsantwort aufweisen, die sich einer zeitlichen Kennkurve der folgenden Form nähern:

$$f(t) = \mathrm{Sinc}(\alpha t/T_s).\mathrm{Sinc}(\beta t/T_s).e^{-(\pi\gamma t/T_s)^2}$$

wobei $\alpha$, $\beta$, und $\gamma$ reale Koeffizienten sind.

## Claims

1. A digital modulation process wherein the successive symbols ($a_i$) of a digital stream are converted into phase

increments ($\Delta\phi$), an accumulated phase is obtained by adding the successive phase increments, a modulating phase ($\Psi$) is obtained by filtering the accumulated phase, a complex signal is produced whose argument represents the modulating phase, two phase quadrature radio waveforms are respectively modulated on the basis of said complex signal, and a radio signal resulting from a combination of the two modulated waveforms is transmitted, characterised in that the filtering of the accumulated phase has a finite impulse response to having a time characteristic of the form:

$$g(t) = \mathrm{Sinc}(\alpha't/T_s).\mathrm{Sinc}(\beta't/T_s).e^{-(\pi\gamma't/T_s)^2},$$

where $T_s$ is the duration of a symbol of the bit stream, $\alpha'$, $\beta'$ and $\gamma'$ are real coefficients, and Sinc() denotes the cardinal sine function.

2.  A process in accordance with claim 1, wherein $T_s = 125$ µs, each symbol ($a_i$) of the bit stream consists of two bits, the phase increments ($\Delta\phi$) are $-\pi$, $-\pi/3$, $\pi/3$ or $\pi$, and $\alpha' \approx 0\cdot77$, $\beta' \approx 0\cdot5$ and $\gamma' \approx 0$.

3.  A process in accordance with claim 1 or 2, wherein said complex signal is digitally filtered and wherein digital signals obtained from the real and imaginary components (I,Q) of the digitally filtered complex signal are converted into analog form before being respectively subjected to anti-aliasing analog filtering and then mixed with the two radio waveforms.

4.  A process in accordance with claim 3, wherein the digital filtering of said complex signal consists of two identical filtering operations on the real and imaginary components thereof (I,Q), with a finite impulse response approaching a time characteristic of the form:

$$f(t) = \mathrm{Sinc}(\alpha t/T_s).\mathrm{Sinc}(\beta t/T_s).e^{-(\pi\gamma t/T_s)^2},$$

where $\alpha$, $\beta$ and $\gamma$ are real coefficients.

5.  A digital modulator comprising: means (10) for converting the successive symbols ($a_i$) of a digital stream into phase increments ($\Delta\phi$), a summator (11) which accumulates the successive phase increments to produce an accumulated phase, a phase filter (15) receiving the accumulated phase and producing a modulating phase ($\Psi$), means (16) for producing a complex signal whose argument represents the modulating phase, and modulator means for respectively modulating two phase quadrature radio waveforms on the basis of said complex signal and for transmitting a radio signal resulting from a combination of the two modulated waveforms, characterised in that the phase filter (15) has a finite impulse response having a time characteristic of the form:

$$g(t) = \mathrm{Sinc}(\alpha't/T_s).\mathrm{Sinc}(\beta't/T_s).e^{-(\pi\gamma't/T_s)^2},$$

where $T_s$ is the duration of a symbol of the bit stream, $\alpha'$, $\beta'$ and $\gamma'$ are real coefficients, and Sinc() denotes the cardinal sine function.

6.  A modulator in accordance with claim 5, wherein $T_s = 125$ µs, each symbol ($a_i$) of the bit stream consists of two bits, the phase increments ($\Delta\phi$) are $-\pi$, $-\pi/3$, $\pi/3$ or $\pi$, and $\alpha' \approx 0\cdot77$, $\beta' \approx 0\cdot5$ and $\gamma' \approx 0$.

7.  A modulator in accordance with claim 5 or 6, wherein the modulator means comprises a digital filter (17) to which said complex signal is applied, digital-to-analog converters (18) respectively processing digital signals obtained from the real and imaginary components (I,Q) of the digitally filtered complex signal, anti-aliasing analog filters (19) receiving the output signals from the digital-to-analog converters, and two mixers (21), each receiving one of the two radio waveforms and the output signal from one of the two anti-aliasing filters.

8.  A modulator in accordance with claim 7, wherein the digital filter, to which said complex signal is applied consists of two identical filters (17) receiving respectively the real and imaginary components (I,Q) of the complex signal and having a finite impulse response approaching a time characteristic of the form:

$$f(t) = Sinc(\alpha t/T_s).Sinc(\beta t/T_s).e^{-(\pi\gamma t/T_s)^2},$$

where $\alpha$, $\beta$ and $\gamma$ are real coefficients.

FIG.1.

FIG.2.

EP 0 936 784 B1

FIG.3.

PUISSANCE (dB)

FREQUENCE $(\times 10^4$ Hz)

FIG.4.